# EUROPÄISCHE PATENTSCHRIFT

(11) **EP 2 225 317 B1**
(45) Veröffentlichungstag und Bekanntmachung des Hinweises auf die Patenterteilung: **27.02.2013**
(21) Anmeldenummer: 08865772.1
(22) Anmeldetag: 09.12.2008
(51) Int. Cl.: C08K 3/32, C08K 5/5313, C08L 69/00, C08L 51/08

(54) **FLAMMGESCHÜTZTE SCHLAGZÄHMODIFIZIERTE POLYCARBONAT-ZUSAMMENSETZUNGEN**
FLAME-PROOF IMPACT RESISTANT-MODIFIED POLYCARBONATE COMPOSITIONS
COMPOSITIONS POLYCARBONATE IGNIFUGÉES À RÉSILIENCE MODIFIÉE

(30) Priorität: 20.12.2007 DE 102007061758
(43) Veröffentlichungstag der Anmeldung: 08.09.2010
(73) Patentinhaber: Bayer MaterialScience AG, 51368 Leverkusen (DE)
(72) Erfinder: ECKEL, Thomas, 41540 Dormagen (DE); TASCHNER, Vera, 50823 Köln (DE); WITTMANN, Dieter, 51375 Leverkusen (DE); WENZ, Eckhard, 50679 Köln (DE)
(86) Internationale Anmeldenummer: PCT/EP2008/010415
(87) Internationale Veröffentlichungsnummer: WO 2009/080201

(56) Entgegenhaltungen:
- EP-A- 1 624 015
- DE-A1-102006 012 988
- US-A1- 2002 077 417

## Beschreibung

Die vorliegende Erfindung betrifft schlagzähmodifizierte Polycarbonat-Zusammensetzungen, welche ein Pfropfpolymerisat enthaltend einen Silikon- oder Silikonacrylatkautschuk und ein Salz einer Phosphinsäure enthalten, die Verwendung der Polycarbonat-Zusammensetzungen zur Herstellung von Formkörpern und die Formkörper selbst.

WO-A 2005/044906 offenbart thermoplastische Formmassen enthaltend mindestens ein Metallsalz der Hypophosphorsäure und mindestens ein aromatisches Polycarbonatharz und deren Mischung mit einem styrolhaltigen Pfropfcopolymerharz mit einem Kautschukanteil von 5-15%. Die Anteile des styrolhaltigen Pfropfcopolymers betragen 10-40 Gew.-%. Die erhaltenen Formmassen zeichnen sich durch gute Flammwidrigkeit, hohe thermische Stabilität unter Verarbeitungsbedingungen und guter Wetter-Resistenz aus. Aufgrund des niedrigen Kautschukanteiles sind andere Eigenschaften, insbesondere mechanische Eigenschaften auf einem niedrigen Niveau.

WO-A 1999/57192 beschreibt thermoplastische Formmassen enthaltend 5-96 Gew.% eines Polyesters oder Polycarbonat, 1-30 Gew.% eines Phosphinsäuresalzes und/oder eines Diphosphinsäuresalzes und/oder deren Polymere, 1-30 Gew.% mindestens eines organischen phosphorhaltigen Flammschutzmittels, und mögliche weitere Additive.

DE-A 102004049342 offenbart thermoplastische Formmassen enthaltend 10-98 Gew.% thermoplastisches Polymer, 0,01 - 50 Gew.% hochverzweigtes Polycarbonat oder hochverzweigter Polyesters oder deren Mischungen, 1-40 Gew.% halogenfreies Flammschutzmittels ausgewählt aus der Gruppe der P-haltigen oder N-haltigen Verbindungen oder der P-N-Kondensate oder deren Mischungen, und mögliche weitere Additive.

JP-A 2001-335699 beschreibt flammgeschützte Harzzusammensetzungen enthaltend zwei oder mehrere thermoplastische Harze ausgewählt aus Styrolharz, aromatisches Polyesterharz, Polyamidharz, Polycarbonatharz und Polyphenylenetherharz und ein oder mehrere (an)organische Phosphinsäuresalze, und mögliche weitere Additive.

JP-A 2001-261973 (Daicel Chemical Industries Ltd.) beschreibt Zusammensetzungen aus thermoplastischen Harzen und (an)organischen Phosphinsäuresalzen. Als Beispiel ist eine Kombination angeführt aus PBT, Calciumphosphinat und PTFE.

JP-A 2002-161211 offenbart Zusammensetzungen aus thermoplastischen Harzen und Flammschutzmitteln wie Salzen der Phosphin- und Phosphorsäure und deren Derivate. Als Beispiel ist eine Kombination angeführt aus PBT, ABS, Polyoxyphenylen, Calciumphosphinat, einem Organophosphat und Glasfasern.

Nach dem Stand der Technik übliche Flammschutzmittel für Polycarbonat/ABS-Blends sind organische, aromatische Phosphate. Diese Verbindungen können niedermolekular, als Gemisch verschiedener Oligomeren oder als Gemisch von Oligomeren mit niedermolekularen Verbindungen vorliegen (z.B. WO-A 99/16828 und WO-A 00/31173). Der guten Wirksamkeit als Flammschutzmittel steht die stark weich machende Wirkung dieser Verbindungen auf die polymeren Bestandteile als Nachteil entgegen, so dass die Wärmeformbeständigkeit dieser Formmassen für viele Anwendungen nicht zufriedenstellend ist.

Aufgabe der vorliegenden Erfindung ist die Bereitstellung von schlagzähmodifizierten Polycarbonat-Formmassen mit einer optimalen Kombination aus gutem Flammschutz, hoher Wärmeformbeständigkeit, guten mechanischen Eigenschaften und guter Chemikalienbeständigkeit.

Es wurde nun überraschend gefunden, dass Formmassen bzw. Zusammensetzungen enthaltend A) Polycarbonat, B) Pfropfpolymerisat enthaltend einen Silikon- oder Silikonacrylatkautschuk, und C) ein Salz einer Phosphinsäure das gewünschte Eigenschaftsprofil aufweisen.

Es wurde somit überraschend gefunden, dass Zusammensetzungen gemäß Anspruch 1, die oben genannte technische Aufgabe lösen.

### Komponente A

Erfindungsgemäß geeignete aromatische Polycarbonate und/oder aromatische Polyestercarbonate gemäß Komponente A sind literaturbekannt oder nach literaturbekannten Verfahren herstellbar (zur Herstellung aromatischer Polycarbonate siehe beispielsweise Schnell, "Chemistry and Physics of Polycarbonates", Interscience Publishers, 1964 sowie die DE-AS 1 495 626, DE-A 2 232 877, DE-A 2 703 376, DE-A 2 714 544, DE-A 3 000 610, DE-A 3 832 396; zur Herstellung aromatischer Polyestercarbonate, z. B. DE-A 3 077 934).

Die Herstellung aromatischer Polycarbonate erfolgt z. B. durch Umsetzung von Diphenolen mit Kohlensäurehalogeniden, vorzugsweise Phosgen und/oder mit aromatischen Dicarbonsäuredihalogeniden, vorzugsweise Benzoldicarbonsäuredihalogeniden, nach dem Phasengrenzflächenverfahren, gegebenenfalls unter Verwendung von Kettenabbrechern, beispielsweise Monophenolen und gegebenenfalls unter Verwendung von trifunktionellen oder mehr als trifunktionellen Verzweigern, beispielsweise Triphenolen oder Tetraphenolen. Ebenso ist eine Herstellung über ein Schmelzepolymerisationsverfahren durch Umsetzung von Diphenolen mit beispielsweise Diphenylcarbonat möglich.

Diphenole zur Herstellung der aromatischen Polycarbonate und/oder aromatischen Polyestercarbonate sind vorzugsweise solche der Formel (I) 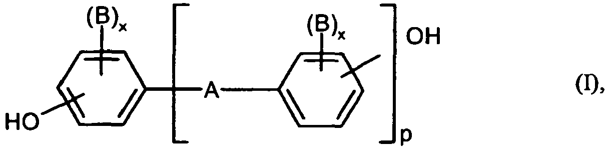 wobei
- A: eine Einfachbindung, C₁ bis C₅-Alkylen, C₂ bis C₅-Alkyliden, C₅ bis C₆-Cycloalkyliden, - O-, -SO-, -CO-, -S-, -SO₂-, C₆ bis C₁₂-Arylen, an das weitere aromatische gegebenenfalls Heteroatome enthaltende Ringe kondensiert sein können, oder ein Rest der Formel (II) oder (III)

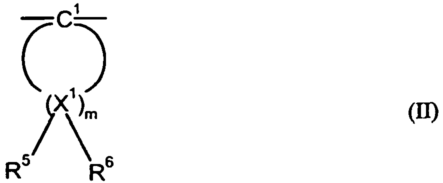

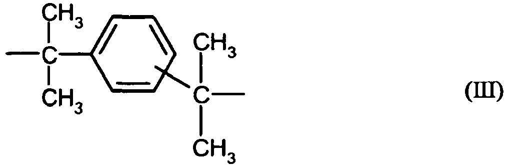

- B: jeweils C₁ bis C₁₂-Alkyl, vorzugsweise Methyl, Halogen, vorzugsweise Chlor und/oder Brom
- x: jeweils unabhängig voneinander 0, 1 oder 2,
- p: 1 oder 0 sind, und
- R⁵ und R⁶: für jedes X¹ individuell wählbar, unabhängig voneinander Wasserstoff oder C₁ bis C₆ Alkyl, vorzugsweise Wasserstoff, Methyl oder Ethyl,
- X¹: Kohlenstoff und
- m: eine ganze Zahl von 4 bis 7, bevorzugt 4 oder 5 bedeuten, mit der Maßgabe, dass an mindestens einem Atom X¹, R⁵ und R⁶ gleichzeitig Alkyl sind.

Bevorzugte Diphenole sind Hydrochinon, Resorcin, Dihydroxydiphenole, Bis-(hydroxyphenyl)-C₁-C₅-alkane, Bis-(hydroxyphenyl)-C₅-C₆-cycloalkane, Bis-(hydroxyphenyl)-ether, Bis-(hydroxyphenyl)-sulfoxide, Bis-(hydroxyphenyl)-ketone, Bis-(hydroxyphenyl)-sulfone und α,α-Bis-(hydroxyphenyl)-diisopropyl-benzole sowie deren kembromierte und/oder kemchlorierte Derivate.

Besonders bevorzugte Diphenole sind 4,4'-Dihydroxydiphenyl, Bisphenol-A, 2,4-Bis(4-hydroxyphenyl)-2-methylbutan, 1,1-Bis-(4-hydroxyphenyl)-cyclohexan, 1,1-Bis-(4-hydroxyphenyl)-3.3.5-trimethylcyclohexan, 4,4'-Dihydroxydiphenylsulfid, 4,4'-Dihydroxydiphenylsulfon sowie deren di- und tetrabromierten oder chlorierten Derivate wie beispielsweise 2,2-Bis(3-Chlor-4-hydroxyphenyl)-propan, 2,2-Bis-(3,5-dichlor-4-hydroxyphenyl)-propan oder 2,2-Bis-(3,5-dibrom-4-hydroxyphenyl)-propan. Insbesondere bevorzugt ist 2,2-Bis-(4-hydroxyphenyl)-propan (Bisphenol-A). Es können die Diphenole einzeln oder als beliebige Mischungen eingesetzt werden. Die Diphenole sind literaturbekannt oder nach literaturbekannten Verfahren erhältlich.

Für die Herstellung der thermoplastischen, aromatischen Polycarbonate geeignete Kettenabbrecher sind beispielsweise Phenol, p-Chlorphenol, p-tert.-Butylphenol oder 2,4,6-Tribromphenol, aber auch langkettige Alkylphenol, wie 4-[2-(2,4,4-Trimethylpentyl)]-phenol, 4-(1,3-Tetramethylbutyl)-phenol gemäß DE-A 2 842 005 oder Monoalkylphenol oder Dialkylphenole mit insgesamt 8 bis 20 Kohlenstoffatomen in den Alkylsubstituenten, wie 3,5-di-tert.-Butylphenol, p-iso-Octylphenol, p-tert.-Octylphenol, p-Dodecylphenol und 2-(3,5-Dimethylheptyl)-phenol und 4-(3,5-Dimethylheptyl)-phenol. Die Menge an einzusetzenden Kettenabbrechern beträgt im allgemeinen zwischen 0,5 mol-%mol-%, und 10 mol-%mol-%, bezogen auf die Molsumme der jeweils eingesetzten Diphenole.

Die thermoplastischen, aromatischen Polycarbonate haben mittlere Gewichtsmittelmolekulargewichte (M_{w}, gemessen z. B. durch GPC, Ultrazentrifuge oder Streulichtmessung) von 10.000 bis 200.000 g/mol, vorzugsweise 15.000 bis 80.000 g/mol, besonders bevorzugt 24.000 bis 32.000 g/mol.

Die thermoplastischen, aromatischen Polycarbonate können in bekannter Weise verzweigt sein, und zwar vorzugsweise durch den Einbau von 0,05 bis 2,0 mol-%, bezogen auf die Summe der eingesetzten Diphenole, an dreifunktionellen oder mehr als dreifunktionellen Verbindungen, beispielsweise solchen mit drei und mehr phenolischen Gruppen.

Geeignet sind sowohl Homopolycarbonate als auch Copolycarbonate. Zur Herstellung erfindungsgemäßer Copolycarbonate gemäß Komponente A können auch 1 bis 25 Gew.%, vorzugsweise 2,5 bis 25 Gew.%, bezogen auf die Gesamtmenge an einzusetzenden Diphenolen, Polydiorganosiloxane mit Hydroxyaryloxy-Endgruppen eingesetzt werden. Diese sind bekannt (US 3 419 634) und nach literaturbekannten Verfahren herstellbar. Die Herstellung Polydiorganosiloxanhaltiger Copolycarbonate ist in der DE-A 3 334 782 beschrieben.

Bevorzugte Polycarbonate sind neben den Bisphenol-A-Homopolycarbonaten die Copolycarbonate von Bisphenol-A mit bis zu 15 mol-%, bezogen auf die Molsummen an Diphenolen, anderen als bevorzugt oder besonders bevorzugt genannten Diphenolen, insbesondere 2,2-Bis(3,5-dibrom-4-hydroxyphenyl)-propan.

Aromatische Dicarbonsäuredihalogenide zur Herstellung von aromatischen Polyestercarbonaten sind vorzugsweise die Disäwedichloride der Isophthalsäure, Terephthalsäure, Diphenylether-4,4'-dicarbonsäure und der Naphthalin-2,6-dicarbonsäure.

Besonders bevorzugt sind Gemische der Disäuredichloride der Isophthalsäure und der Terephthalsäure im Verhältnis zwischen 1:20 und 20:1.

Bei der Herstellung von Polyestercarbonaten wird zusätzlich ein Kohlensäurehalogenid, vorzugsweise Phosgen, als bifunktionelles Säurederivat mit verwendet.

Als Kettenabbrecher für die Herstellung der aromatischen Polyestercarbonate kommen außer den bereits genannten Monophenolen noch deren Chlorkohlensäureester sowie die Säurechloride von aromatischen Monocarbonsäuren, die gegebenenfalls durch C₁ bis C₂₂-Alkylgruppen oder durch Halogenatome substituiert sein können, sowie aliphatische C₂ bis C₂₂-Monocarbonsäurechloride in Betracht.

Die Menge an Kettenabbrechern beträgt jeweils 0,1 bis 10 mol-%, bezogen im Falle der phenolischen Kettenabbrecher auf Mol Diphenol und im Falle von Monocarbonsäurechlorid-Kettenabbrecher auf Mol Dicarbonsäuredichlorid.
Die aromatischen Polyestercarbonate können auch aromatische Hydroxycarbonsäuren eingebaut enthalten.

Die aromatischen Polyestercarbonate können sowohl linear als auch in bekannter Weise verzweigt sein (siehe dazu DE-A 2 940 024 und DE-A 3 007 934).

Als Verzweigungsmittel können beispielsweise drei- oder mehrfunktionelle Carbonsäurechloride, wie Trimesinsäuretrichlorid, Cyanursäuretrichlorid, 3,3'-,4,4'-Benzophenon-tetracarbonsäuretetrachlorid, 1,4,5,8-Napthalintetracarbon-säuretetrachlorid oder Pyromellithsäuretetrachlorid, in Mengen von 0,01 bis 1,0 mol-% (bezogen auf eingesetzte Dicarbonsäuredichloride) oder drei- oder mehrfunktionelle Phenole, wie Phloroglucin, 4,6-Dimethyl-2,4,6-tri-(4-hydroxyphenyl)-hept-2-en, 4,6-Dimethyl-2,4-6-tri-(4-hydroxyphenyl)-heptan, 1,3,5-Tri-(4-hydroxyphenyl)-benzol, 1,1,1-Tri-(4-hydroxyphenyl)-ethan, Tri-(4-hydroxyphenyl)-phenylmethan, 2,2-Bis[4,4-bis(4-hydroxy-phenyl)-cyclohexyl]-propan, 2,4-Bis(4-hydroxyphenyl-isopropyl)-phenol, Tetra-(4-hydroxyphenyl)-methan, 2,6-Bis(2-hydroxy-5-methyl-benzyl)-4-methyl-phenol, 2-(4-Hydroxyphenyl)-2-(2,4-dihydroxyphenyl)-propan, Tetra-(4-[4-hydroxyphenyl-isopropyl]-phenoxy)-methan, 1,4-Bis[4,4'-dihydroxytri-phenyl)-methyl]-benzol, in Mengen von 0,01 bis 1,0 mol-% bezogen auf eingesetzte Diphenole verwendet werden. Phenolische Verzweigungsmittel können mit den Diphenolen vorgelegt, Säurechlorid-Verzweigungsmittel können zusammen mit den Säuredichloriden eingetragen werden.

In den thermoplastischen, aromatischen Polyestercarbonaten kann der Anteil an Carbonatstruktureinheiten beliebig variieren. Vorzugsweise beträgt der Anteil an Carbonatgruppen bis zu 100 mol-%, insbesondere bis zu 80 mol-%, besonders bevorzugt bis zu 50 mol-%, bezogen auf die Summe an Estergruppen und Carbonatgruppen. Sowohl der Ester- als auch der Carbonatanteil der aromatischen Polyestercarbonate kann in Form von Blöcken oder statistisch verteilt im Polykondensat vorliegen.

Die relative Lösungsviskosität (ηᵣₑₗ) der aromatischen Polycarbonate und Polyestercarbonate liegt im Bereich 1,18 bis 1,4, vorzugsweise 1,20 bis 1,32 (gemessen an Lösungen von 0,5 g Polycarbonat oder Polyestercarbonat in 100 ml Methylenchlorid-Lösung bei 25°C).

Die thermoplastischen, aromatischen Polycarbonate und Polyestercarbonate können allein oder im beliebigen Gemisch eingesetzt werden.

### Komponente B

Die Komponente B umfasst ein oder mehrere Pfropfpolymerisate von
- B. 1: 5 bis 95, vorzugsweise 10 bis 90 Gew.-% eines oder mehrerer Vinylmonomeren auf
- B.2: 95 bis 5, vorzugsweise 90 bis 10 Gew.-% einer oder mehrerer Pfropfgrundlagen ausgewählt aus der Gruppe der Silikonkautschuke (B.2.1) und Silikonacrylat-Kautschuke (B.2.2).

Die Pfropfcopolymerisate B werden durch radikalische Polymerisation, z.B. durch Emulsions-, Suspensions-, Lösungs- oder Massepolymerisation, vorzugsweise durch Emulsions- oder Massepolymerisation hergestellt.

Geeignete Monomere B. 1 sind Vinylmonomere wie Vinylaromaten und/oder kernsubstituierte Vinylaromaten (wie Styrol, α-Methylstyrol, p-Methylstyrol, p-Chlorstyrol), Methacrylsäure-(C₁-C₈)-Alkylester (wie Methylmethacrylat, Ethylmethacrylat, 2-Ethylhexylmethacrylat, Allylmethacrylat), Acrylsäure-(C₁-C₈)-Alkylester (wie Methylacrylat, Ethylacrylat, n-Butylacrylat, t-Butylacrylat), organische Säuren (wie Acrylsäure, Methacrylsäure), und/oder Vinylcyanide (wie Acrylnitril und Methacrylnitril), und/oder Derivate (wie Anhydride und Imide) ungesättigter Carbonsäuren (beispielsweise Maleinsäureanhydrid und N-Phenyl-Maleinimid). Diese Vinylmonomere können alleine oder in Mischungen von mindestens zwei Monomeren verwendet werden.

Bevorzugte Monomere B.1 sind ausgewählt aus mindestens einem der Monomere Styrol, α-Methylstyrol, Methylmethacrylat, n-Butylacrylat und Acrylnitril. Besonders bevorzugt wird als Monomer B.1 Methylmethacrylat eingesetzt.

Die Glasübergangstemperatur der Pfropfgrundlage B.2 beträgt < 10°C, vorzugsweise < 0°C, besonders bevorzugt < -20°C. Die Pfropfgrundlagen B.2 hat im allgemeinen eine mittlere Teilchengröße (d₅₀-Wert) von 0,05 bis 10 µm, vorzugsweise 0,06 bis 5 µm, besonders bevorzugt 0,08 bis 1 µm.

Die mittlere Teilchengröße d₅₀ ist der Durchmesser, oberhalb und unterhalb dessen jeweils 50 Gew.-% der Teilchen liegen. Er kann mittels Ultrazentrifugenmessung (W. Scholtan, H. Lange, Kolloid-Z. und Z. Polymere 250 (1972), 782-796) bestimmt werden.

Geeignete Silikonkautschuke gemäß B.2.1 sind Silikonkautschuke mit pfropfaktiven Stellen, deren Herstellungsmethode beispielsweise in US 2891920, US 3294725, DE-OS 3 631 540, EP 249964, EP 430134 und US 4888388 beschrieben wird.

Der Silikonkautschuk gemäß B.2.1 wird bevorzugt durch Emulsionspolymerisation hergestellt, bei der Siloxan-Monomerbausteine, Vemetzungs- oder Verzweigungsmittel (IV) und gegebenenfalls Pfropfmittel (V) eingesetzt werden.

Als Siloxan-Monomerbausteine werden beispielsweise und bevorzugt Dimethylsiloxan oder cyclische Organosiloxane mit wenigstens 3 Ringgliedern, vorzugsweise 3 bis 6 Ringgliedern, wie beispielsweise und bevorzugt Hexamethylcyclotrisiloxan, Octamethylcyclotetrasiloxan, Decamethylcyclopentasiloxan, Dodecamethylcyclohexasiloxan, Trimethyl-triphenyl-cyclotrisiloxane, Tetramethyl-tetraphenyl-cyclotetrasiloxane, Octaphenylcyclotetrasiloxan eingesetzt.

Die Organosiloxan-Monomere können allein oder in Form von Mischungen mit 2 oder mehr Monomeren eingesetzt werden. Der Silikonkautschuk enthält vorzugsweise nicht weniger als 50 Gew.-% und besonders bevorzugt nicht weniger als 60 Gew.-% Organosiloxan, bezogen auf das Gesamtgewicht der Silikonkautschuk-Komponente.

Als Vemetzungs- oder Verzweigungsmittel (IV) werden vorzugsweise silanbasierende Vernetzungsmittel mit einer Funktionalität von 3 oder 4, besonders bevorzugt 4, verwendet. Beispielhaft und vorzugsweise seien genannt: Trimethoxymethylsilan, Triethoxyphenylsilan, Tetramethoxysilan, Tetraethoxysilan, Tetra-n-propoxysilan und Tetrabutoxysilan. Das Vernetzungsmittel kann allein oder in Mischung von zwei oder mehreren eingesetzt werden. Besonders bevorzugt ist Tetraethoxysilan.

Das Vernetzungsmittel wird in einem Mengenbereich zwischen 0,1 und 40 Gew.%, bezogen auf das Gesamtgewicht der Silikonkautschuk-Komponente, eingesetzt. Die Menge an Vernetzungsmittel wird so gewählt, dass der Quellungsgrad des Silikonkautschuks, gemessen in Toluol, zwischen 3 und 30 liegt, bevorzugt zwischen 3 und 25, und besonders bevorzugt zwischen 3 und 15. Der Quellungsgrad ist definiert als das Gewichtsverhältnis zwischen der Menge Toluol, die durch den Silikonkautschuk absorbiert wird, wenn er mit Toluol bei 25°C gesättigt wird, und der Menge an Silikonkautschuk im getrockneten Zustand. Die Ermittlung des Quelleungsgrades ist im Detail in EP 249964 beschrieben.

Wenn der Quellungsgrad geringer als 3 ist, d.h. wenn der Gehalt an Vernetzungsmittel zu hoch ist, zeigt der Silikonkautschuk nicht ausreichend Kautschukelastizität. Wenn der Quellungsindex größer als 30 ist, kann der Silikonkautschuk keine Domänenstruktur im Matrixpolymer ausbilden und daher auch keine Schlagzähigkeit verbessern, der Effekt wäre dann ähnlich einer einfachen Zugabe von Polydimethylsiloxan.

Tetrafunktionelle Vernetzungsmittel sind bevorzugt gegenüber trifunktionellen, weil dann der Quellungsgrad einfacher kontrollierbarer innerhalb der oben beschriebenen Grenzen ist.

Als Pfropfmittel (V) geeignet sind Verbindungen, die fähig sind, Strukturen der folgenden Formeln zu bilden:

CH₂=C(R²)-COO-(CH₂)ₚ-SiR¹ₙO_{(3-n)/2} (V-1)

CH₂=CH-SiR¹ₙO_{(3-n)/2} (V-2)

oder

HS-(CH₂)ₚ-SiR¹ₙO_{(3-0)/2} (V-3),

wobei
- R¹: für C₁-C₄-Alkyl, vorzugsweise Methyl, Ethyl oder Propyl, oder Phenyl,
- R²: für Wasserstoff oder Methyl stehen,
- n: 0, 1 oder 2 und
- p: eine ganze Zahl von 1 bis 6 bedeuten.

Acryloyl- oder Methacryloyloxysilane sind besonders geeignet, die o.g. Struktur (V-1) zu bilden, und haben eine hohe Pfropfeffizienz. Dadurch wird eine effektive Bildung der Pfropfketten gewährleistet, und somit die Schlagzähigkeit der resultierenden Harzzusammensetzung begünstigt. Beispielhaft und bevorzugt seien genannt: β-Methacryloyloxy-ethyldimethoxymethyl-silan, γ-Methacryloyloxy-propylmethoxydimethyl-silan, γ-Methacryloyloxy-propyldimethoxymethyl-silan, γ-Methacryloyloxy-propyltrimethoxy-silan, γ-Methacryloyloxy-propylethoxydiethyl-silan, γ-Methacryloyloxy-propyldiethoxymethyl-silan, δ-Methacryloyl-oxy-butyldiethoxymethyl-silane oder Mischungen hieraus.

Bevorzugt werden 0 bis 20 Gew.-% Pfropfmittel bezogen auf das Gesamtgewicht des Silikonkautschuks eingesetzt.

Der Silikonkautschuk kann durch Emulsionspolymerisation hergestellt werden, wie beispielsweise in US 2891920 und US 3294725 beschrieben. Der Silikonkautschuk fällt dabei in Form eines wäßrigen Latex an. Dafür wird ein Gemisch enthaltend Organosiloxan, Vernetzungsmittel und gegebenenfalls Pfropfmittel unter Scherung mit Wasser vermischt, beispielsweise durch einen Homogenisator, in Gegenwart eines Emulgators auf Sulfonsäurebasis wie z.B. Alkylbenzolsulfonsäure oder Alkylsulfonsäure, wobei die Mischung zum Silikonkautschuklatex auspolymerisiert. Besonders geeignet ist eine Alkylbenzolsulfonsäure, da sie nicht nur als Emulgator, sondern auch als Polymerisationsinitiator wirkt. In diesem Fall ist eine Kombination der Sulfonsäure mit einem Metallsalz einer Alkylbenzolsulfonsäure oder mit einem Metallsalz einer Alkylsulfonsäure günstig, weil dadurch das Polymer während der späteren Pfropfpolymerisation stabilisiert wird.

Nach der Polymerisation wird die Reaktion beendet, indem die Reaktionsmischung durch Zugabe einer wäßrigen alkalischen Lösung neutralisiert wird, z.B. durch Zugabe einer wäßrigen Natriumhydroxid, Kaliumhydroxid oder Natriumcarbonat-Lösung.

Als Pfropfgrundlagen B.2 sind erfindungsgemäß auch Silikonacrylat-Kautschuke (B.2.2) geeignet. Diese Silikonacrylat-Kautschuke sind Komposit-Kautschuke mit pfropfaktiven Stellen enthaltend 10 - 90 Gew.-% Silikonkautschuk-Anteil und 90 bis 10 Gew.-% Polyalkyl(meth)acrylatkautschuk-Anteil, wobei sich die beiden genannten Kautschuk-Komponenten im Komposit-Kautschuk gegenseitig durchdringen, so dass sie sich nicht wesentlich voneinander trennen lassen.

Wenn im Komposit-Kautschuk der Anteil der Silikonkautschuk-Komponente zu hoch ist, haben die fertigen Harzzusammensetzungen nachteilige Oberflächeneigenschaften und eine verschlechterte Einfärbbarkeit. Wenn dagegen der Anteil der Polyalkyl(meth)acrylatkautschuk-Komponente im Komposit-Kautschuk zu hoch ist, wird die Schlagzähigheit der fertigen Harzzusammensetzung nachteilig beeinflußt).

Silikonacrylat-Kautschuke sind bekannt und beispielsweise beschrieben in US 5,807,914, EP 430134 und US 4888388.

Geeignete Silikonkautschuk-Komponenten der Silikonacrylat-Kautschuke gemäß B.2.2 sind solche, wie bereits unter B.2.1 beschrieben.

Geeignete Polyalkyl(meth)acrylatkautschuk-Komponenten der Silikonacrylat-Kautschuke gemäß B.2.2 können hergestellt werden aus Methacrylsäurealkylestern und/oder Acrylsäurealkylestern, einem Vernetzungsmittel (VI) und einem Pfropfmittel (VII). Hierbei sind beispielhafte und bevorzugte Methacrylsäurealkylester und/oder Acrylsäurealkylester die C₁ bis C₈-Alkylester, beispielsweise Methyl-, Ethyl-, n-Butyl-, t-Butyl-, n-Propyl-, n-Hexyl-, n-Octyl-, n-Lauryl- und 2-Ethylhexylester; Halogenalkylester, vorzugsweise Halogen-C₁-C₈-alkylester, wie Chlorethylacrylat sowie Mischungen dieser Monomeren. Besonders bevorzugt ist n-Butylacrylat.

Als Vernetzungsmittel (VI) für die Polyalkyl(meth)acrylatkautschuk-Komponente des Silikonacrylat-Kautschuks können Monomere mit mehr als einer polymerisierbaren Doppelbindung eingesetzt werden. Bevorzugte Beispiele für vernetzende Monomere sind Ester ungesättigter Monocarbonsäuren mit 3 bis 8 C-Atomen und ungesättigter einwertiger Alkohole mit 3 bis 12 C-Atomen, oder gesättigter Polyole mit 2 bis 4 OH-Gruppen und 2 bis 20 C-Atomen, wie Ethylenglykoldimethacrylat, Propylenglykoldimethacrylat, 1,3-Butylenglykoldimethacrylat und 1,4-Butylenglykoldimethacrylat. Die Vernetzungsmittel können alleine oder in Gemischen aus mindestsens zwei Vernetzungsmitteln verwendet werden.

Beispielhafte und bevorzugte Pfropfmittel (VII) sind Allylmethacrylat, Triallylcyanurat, Triallylisocyanurat oder Mischungen hieraus. Allylmethacrylat kann auch als Vernetzungsmittel (VI) eingesetzt werden. Die Pfropfmittel können alleine oder in Gemischen aus mindestens zwei Pfropfmitteln verwendet werden.

Die Menge an Vernetzungsmittel (VI) und Pfropfmittel (VII) beträgt 0,1 bis 20 Gew.%, bezogen auf das gesamte Gewicht der Polyalkyl(meth)acrylatkautschuk-Komponente des Silikonacrylat-Kautschuks.

Der Silikonacrylat-Kautschuk wird hergestellt, indem zunächst der Silikonkautschuk gemäß B.2.1 als wäßriger Latex hergestellt wird. Dieser Latex wird anschließend mit den zu verwendenden Methacrylsäurealkylestern und/oder Acrylsäurealkylestern, dem Vernetzungsmittel (VI) und dem Pfropfmittel (VII) angereichert, und eine Polymerisation wird durchgeführt. Bevorzugt ist eine radikalisch initiierte Emulsionspolymerisation, beispielsweise durch einen Peroxid-, einen Azo- oder Redoxinitiator. Besonders bevorzugt ist die Verwendung eines Redoxinitiatorsystems, speziell eines Sulfoxylat-Initiatorsystems hergestellt durch Kombiniation von Eisensulfat, Dinatriumethylendiamintetraacetat, Rongalit und Hydroperoxid.

Das Pfropfmittel (V), das bei der Herstellung des Silikonkautschuks verwendet wird, führt dabei dazu, daß der Polyalkyl(meth)acrylatkautschuk-Anteil kovalent an den Silikonkautschuk-Anteil angebunden wird. Bei der Polymerisation durchdringen sich die beiden Kautschuk-Komponenten gegenseitig und bilden so den Komposit-Kautschuk, der sich nach der Polymerisation nicht mehr in seine Bestandteile aus Silikonkautschuk-Komponente und Polyalkyl(meth)acrylatkautschuk-Komponente trennen läßt.

Zur Herstellung der als Komponente B) genannten Silikon(acrylat)-Pfropflcautschuke B werden die Monomere B. 1 auf die Kautschuk-Grundlage B.2. aufgepfropft.

Dabei können die beispielsweise in EP 249964, EP 430134 und US 4888388 beschriebenen Polymerisationsmethoden angewendet werden.

Beispielsweise erfolgt die Pfropfpolymerisation nach folgender Polymerisationsmethode: In einer ein- oder mehrstufigen radikalisch initiierten Emulsionspolymerisation werden die gewünschten Vinylmonomere B.1 auf die Pfropfgrundlage, die als wässriger Latex vorliegt, aufpolymerisiert. Die Pfropfeffizienz soll dabei möglichst hoch sein und beträgt bevorzugt größer oder gleich 10%. Die Pfropfeffizienz hängt maßgeblich vom verwendeten Pfropfmittel (V) bzw. (VII) ab. Nach der Polymerisation zum Silikon(acrylat)-Pfropfkautschuk wird der wäßrige Latex in heißes Wasser gegeben, in dem zuvor Metallsalze gelöst wurden, wie z.B. Calciumchlorid oder Magnesiumsulfat. Dabei koaguliert der Silikon(acrylat)-Pfropfkautschuk und kann anschließend separiert werden.

Die als Komponente B) genannten Methacrylsäurealkylester- und Acrylsäurealkylester-Pfropfkautschuke sind kommerziell erhältlich. Beispielhaft seien genannt: Metablen^{®} SX 005 und Metablen^{®} SRK 200 der Mitsubishi Rayon Co. Ltd.

### Komponente C

Unter dem Salz einer Phosphinsäure (Komponente C) im erfindungsgemäßen Sinne sind das Salz einer Phosphinsäure mit einem beliebigen Metallkation zu verstehen. Es können auch Mischungen von Salzen eingesetzt werden, die sich in Ihrem Metallkation unterscheiden. Bei den Metallkationen handelt es sich um die Kationen Metalle der 1. Hauptgruppe (Alkalimetalle, vorzugsweise Li⁺, Na⁺, K⁺), der 2. Hauptgruppe (Erdalkalimetalle; vorzugsweise Mg²⁺, Ca²⁺, Sr²⁺, Ba²⁺, besonders bevorzugt Ca²⁺) oder der 3. Hauptgruppe (Elemente der Borgruppe; vorzugsweise Al³⁺) und/oder der 2., 7. oder 8. Nebengruppe (vorzugsweise Zn²⁺, Mn²⁺, Fe²⁺, Fe³⁺) des Periodensystems ist.

Es wird ein Salz oder eine Mischung von Salzen einer Phosphinsäure der Formel (IV) eingesetzt, 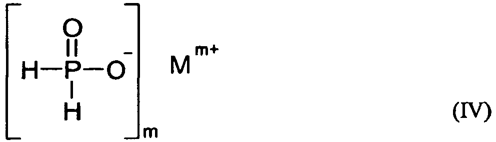 worin M^{m+} ein Metallkation der 1. Hauptgruppe (Alkalimetalle; m = 1), 2. Hauptgruppe (Erdalkalimetalle; m = 2) oder der 3. Hauptgruppe (m = 3) oder der 2., 7. oder 8. Nebengruppe (wobei m eine ganze Zahl von 1 bis 6, bevorzugt 1 bis 3 und besonders bevorzugt 2 oder 3 bedeutet) des Periodensystems ist.

Besonders bevorzugt sind in Formel (IV)
für m = 1 die Metallkationen M⁺= Li⁺, Na⁺, K⁺,
für m = 2 die Metallkationen M²⁺ = Mg²⁺, Ca²⁺,Sr²⁺, Ba²⁺ und
für m = 3 die Metallkationen M³⁺ = Al³⁺,
höchst bevorzugt sind Ca²⁺ (m = 2) und Al³⁺ (m = 3).

In einer bevorzugten Ausführungsform ist die mittlere Teilchengröße d₅₀ des Phosphinsäuresalzes (Komponente C) kleiner als 80 µm, vorzugsweise kleiner als 60 µm, besonders bevorzugt ist d₅₀ zwischen 10 µm und 55 µm. Die mittlere Teilchengröße d₅₀ ist der Durchmesser, oberhalb und unterhalb dessen jeweils 50 Gew.-% der Teilchen liegen. Es können auch Mischungen von Salzen eingesetzt werden, die sich in ihrer mittleren Teilchengröße d₅₀ unterscheiden.

Diese Anforderungen an die Teilchengröße d₅₀ des Phosphinsäuresalzes sind jeweils mit dem technischen Effekt verbunden, dass die Flammschutzeffizienz des Phosphinsäuresalzes erhöht ist.

Das Phosphinsäuresalz kann entweder alleine oder in Kombination mit anderen phosphorhaltigen Flammschutzmitteln eingesetzt werden. Vorzugsweise sind die erfindungsgemäßen Zusammensetzungen frei von phosphorhaltigen Flammschutzmitteln ausgewählt aus den Gruppe der Mono- und oligomeren Phosphor- und Phosphonsäureester, Phosphonatamine und Phosphazene. Diese anderen phosphorhaltigen Flammschutzmitteln wie beispielsweise die Mono- und oligomeren Phosphor- und Phosphonsäureester besitzen gegenüber den Phosphinsäuresalzen den Nachteil, dass diese die Wärmeformbeständigkeit der Formmassen herabsetzen.

### Komponente D

Die Komponente D umfasst ein oder mehrere thermoplastische Vinyl(Co)Polymerisate D.1 und/oder Polyalkylenterephthalate D.2.

Geeignet sind als Vinyl(Co)Polymerisate D. Polymerisate von mindestens einem Monomeren aus der Gruppe der Vinylaromaten, Vinylcyanide (ungesättigte Nitrile), (Meth)Acrylsäure-(C₁-C₈)-Alkylester, ungesättigte Carbonsäuren sowie Derivate (wie Anhydride und Imide) ungesättigter Carbonsäuren. Insbesondere geeignet sind (Co)Polymerisate aus
- D.1.1: 50 bis 99, vorzugsweise 60 bis 80 Gew.-Teilen Vinylaromaten und/oder kemsubstituierten Vinylaromaten wie Styrol, α-Methylstyrol, p-Methylstyrol, p-Chlorstyrol) und/oder (Meth)Acrylsäure-(C₁-C₈)-Alkylester, wie Methylmethacrylat, Ethylmethacrylat), und
- D.1.2: 1 bis 50, vorzugsweise 20 bis 40 Gew.-Teilen Vinylcyanide (ungesättigte Nitrile) wie Acryl-nitril und Methacrylnitril und/oder (Meth)Acryl-säure-(C₁-C₈)-Alkylester, wie Methylmeth-acrylat, n-Butylacrylat, t-Butylacrylat, und/oder ungesättigte Carbonsäuren, wie Maleinsäure, und/oder Derivate, wie Anhydride und Imide, ungesättigter Carbonsäuren, beispielsweise Maleinsäureanhydrid und N-Phenylmaleinimid).

Die Vinyl(co)polymerisate D.1 sind harzartig, thermoplastisch und kautschukfrei. Besonders bevorzugt ist das Copolymerisat aus D.1.1 Styrol und D.1.2 Acrylnitril.

Die (Co)Polymerisate gemäß D. 1 sind bekannt und lassen sich durch radikalische Polymerisation, insbesondere durch Emulsions-, Suspensions-, Lösungs- oder Massepolymerisation herstellen. Die (Co)Polymerisate besitzen vorzugsweise mittlere Molekulargewichte Mw (Gewichtsmittel, ermittelt durch Lichtstreuung oder Sedimentation) zwischen 15.000 und 200.000.

Die Polyalkylenterephthalate der Komponente D.2 sind Reaktionsprodukte aus aromatischen Dicarbonsäuren oder ihren reaktionsfähigen Derivaten, wie Dimethylestem oder Anhydriden, und aliphatischen, cycloaliphatischen oder araliphatischen Diolen sowie Mischungen dieser Reaktionsprodukte.

Bevorzugte Polyalkylenterephthalate enthalten mindestens 80 Gew.-%, vorzugsweise mindestens 90 Gew.-%, bezogen auf die Dicarbonsäurekomponente Terephthalsäurereste und mindestens 80 Gew.-%, vorzugsweise mindestens 90 Gew-%, bezogen auf die Diolkomponente Ethylenglykol- und/oder Butandiol-1,4-Reste.

Die bevorzugten Polyalkylenterephthalate können neben Terephthalsäweresten bis zu 20 mol-%, vorzugsweise bis zu 10 mol-%, Reste anderer aromatischer oder cycloaliphatischer Dicarbonsäuren mit 8 bis 14 C-Atomen oder aliphatischer Dicarbonsäuren mit 4 bis 12 C-Atomen enthalten, wie z.B. Reste von Phthalsäure, Isophthalsäure, Naphthalin-2,6-dicarbonsäure, 4,4'-Diphenyldicarbonsäure, Bernsteinsäure, Adipinsäure, Sebacinsäure, Azelainsäure, Cyclohexandiessigsäwe.

Die bevorzugten Polyalkylenterephthalate können neben Ethylenglykol- bzw. Propandiol-1,3- bzw. Butandiol-1,4-resten bis zu 20 Mol.-% anderer aliphatischer Diole mit 3 bis 12 C-Atomen oder cycloaliphatischer Diole mit 6 bis 21 C-Atomen enthalten, z.B. Reste von 1,3-Propandiol, 2-Ethylpropan-1,3-diol, Neopentylglykol, 1,5-Pentan-diol, 1,6-Hexandiol, Cyclohexan-1,4-dimethanol, 3-Methylpentan-2,4-diol, 2-Methylpentan-2,4-diol, 2,2,4-Trimethylpentan-1,3-diol und 2-Ethylhexan-1,6-diol, 2,2-Diethylpropan-1,3-diol, 2,5-Hexandiol, 1,4-D1-(β-hydroxyethoxy)-benzol, 2,2-Bis-(4-hydroxycyclohexyl)-propan, 2,4-Dihydroxy-1,1,3,3-tetramethyl-cyclobutan, 2,2-bis-(3-β-hydroxyethoxyphenyl)-propan und 2,2-bis-(4-hydroxypropoxyphenyl)-propan (DE-A 24 07 674, 24 07 776, 27 15 932).

Die Polyalkylenterephthalate können durch Einbau relativ kleiner Mengen 3- oder 4-wertiger Alkohole oder 3- oder 4-basischer Carbonsäuren, z.B. gemäß DE-A 1 900 270 und US-PS 3 692 744, verzweigt werden. Beispiele bevorzugter Verzweigungsmittel sind Trimesinsäure, Trimellithsäure, Trimethylolethan und -propan und Pentaerythrit.

Besonders bevorzugt sind Polyalkylenterephthalate, die allein aus Terephthalsäure und deren reaktionsfähigen Derivaten (z.B. deren Dialkylestern) und Ethylenglykol und/oder Butandiol-1,4 hergestellt worden sind, und Mischungen dieser Polyalkylenterephthalate.

Mischungen von Polyalkylenterephthalaten enthalten 1 bis 50 Gew.-%, vorzugsweise 1 bis 30 Gew.-%, Polyethylenterephthalat und 50 bis 99 Gew.-%, vorzugsweise 70 bis 99 Gew.-%, Polybutylenterephthalat.

Die vorzugsweise verwendeten Polyalkylenterephthalate besitzen im allgemeinen eine Grenzviskosität von 0,4 bis 1,5 dl/g, vorzugsweise 0,5 bis 1,2 dl/g, gemessen in Phenol/o-Dichlorbenzol (1: 1 Gewichtsteile) bei 25°C im Ubbelohde-Viskosimeter.

Die Polyalkylenterephthalate lassen sich nach bekannten Methoden herstellen (s. z.B. Kunststoff-Handbuch, Band VIII, S. 695 ff., Carl-Hanser-Verlag, München 1973).

### Komponente E

Die Zusammensetzung kann weitere handelsübliche Zusatzstoffe gemäß Komponente E) wie von Komponente B) verschiedene kautschukmodifizierte Pfropfpolymerisate, Flammschutzsynergisten, Antidrippingmittel (beispielsweise Verbindungen der Substanzklassen der fluorierten Polyolefine, der Silikone sowie Aramidfasern), Gleit- und Entformungsmittel (beispielsweise Pentaerythrittetrastearat), Nukleiermittel, Stabilisatoren, Antistatika (beispielsweise Leitruße, Carbonfasern, Carbon Nanotubes sowie organische Antistatika wie Polyalkylenether, AlkylSulfonate oder Polyamid-haltige Polymere), Säuren, Füll- und Verstärkungsstoffe (beispielsweise Glas- oder Karbonfasem, Glimmer, Kaolin, Talk, CaCO₃ und Glasschuppen) sowie Farbstoffe und Pigmente enthalten.

Die von Komponente B verschiedenen Pfropfpolymerisate E* umfassen insbesondere ein oder mehrere Pfropfpolymerisate von
- E.1: 5 bis 95 Gew.-%, wenigstens eines Vinylmonomeren auf
- E.2: 95 bis 5 Gew.-% wenigstens einer Pfropfgrundlage ausgewählt aus der Gruppe bestehend aus Dienkautschuke, EP(D)M-Kautschuke (d.h. solche auf Basis Ethylen/Propylen und gegebenenfalls Dien), Acrylat-, Polyurethan-, Chloropren und Ethylen/Vinylcetat-Kautschuke.

Monomere E.1 sind vorzugsweise Gemische aus
- E.1.1: 50 bis 99 Gew.-Teilen (bezogen auf die Summe von E.1.1 und E.1.2 gleich 100 Gew.-Teile) Vinylaromaten und/oder kemsubstituierten Vinylaromaten (wie Styrol, α-Methylstyrol, p-Methylstyrol, p-Chlorstyrol) und/oder (Meth)Acrylsäure-(C₁-C₈)-Alkylester, wie Methylmethacrylat, Ethylmethacrylat), und
- E.1.2: 1 bis 50 Gew.-Teilen (bezogen auf die Summe von E.1.1 und E.1.2 gleich 100 Gew.-Teile) Vinylcyanide (ungesättigte Nitrile wie Acrylnitril und Methacrylnitril) und/oder (Meth)Acrylsäure-(C₁-C₈)-Alkylester, wie Methylmethacrylat, n-Butylacrylat, t-Butylacrylat, und/oder Derivate (wie Anhydride und Imide) ungesättigter Carbonsäuren, beispielsweise Maleinsäureanhydrid und N-Phenyl-Maleinimid.

Bevorzugt sind die erfindungsgemäßen Zusammensetzungen frei an von Komponente B verschiedener Pfropfpolymerisate E*.

### Herstellung der Formmassen und Formkörper

Die erfindungsgemäßen thermoplastischen Formmassen werden hergestellt, indem man die jeweiligen Bestandteile in bekannter Weise vermischt und bei Temperaturen von 240°C bis 300°C in üblichen Aggregaten wie Innenknetern, Extrudern und Doppelwellenschnecken schmelzcompoundiert und schmelzextrudiert.

Die Vermischung der einzelnen Bestandteile kann in bekannter Weise sowohl sukzessive als auch simultan erfolgen, und zwar sowohl bei etwa 20°C (Raumtemperatur) als auch bei höherer Temperatur.

Gegenstand der Erfindung sind ebenfalls Verfahren zur Herstellung der Formmassen und die Verwendung der Formmassen zur Herstellung von Formkörpern sowie die Formteile selbst.

Die erfindungsgemäßen Formmassen können zur Herstellung von Formkörpern jeder Art verwendet werden. Diese können durch Spritzguss, Extrusion und Blasformverfahren hergestellt werden. Eine weitere Form der Verarbeitung ist die Herstellung von Formkörpern durch Tiefziehen aus zuvor hergestellten Platten oder Folien.

Beispiele für solche Formkörper sind Folien, Profile, Gehäuseteile jeder Art, z.B. für Haushaltsgeräte wie Fernsehgeräte, Saftpressen, Kaffeemaschinen, Mixer; für Büromaschinen wie Monitore, Flatscreens, Notebooks, Drucker, Kopierer; Platten, Rohre, Elektroinstallationskanäle, Fenster, Türen und weitere Profile für den Bausektor (Innenausbau und Außenanwendungen) sowie Elektro- und Elektronikteile wie Schalter, Stecker und Steckdosen sowie Karosserie- bzw. Innenbauteile für Nutzfahrzeuge, insbesondere für den Automobilbereich.

Insbesondere können die erfindungsgemäßen Formmassen beispielsweise auch zur Herstellung von folgenden Formkörpern oder Formteilen verwendet werden: Innenausbauteile für Schienenfahrzeuge, Schiffe, Flugzeuge, Busse und andere Kraftfahrzeuge, Gehäuse von Kleintransformatoren enthaltenden Elektrogeräten, Gehäuse für Geräte zur Informationsverarbeitung und -Übermittlung, Gehäuse und Verkleidung von medizinischen Geräten, Massagegeräte und Gehäuse dafür, Spielfahrzeuge für Kinder, flächige Wandelemente, Gehäuse für Sicherheitseinrichtungen und für Fernsehgeräte, wärmeisolierte Transportbehältnisse, Formteile für Sanitär- und Badausrüstungen, Abdeckgitter für Lüfteröffnungen und Gehäuse für Gartengeräte.

Die folgenden Beispiele dienen der weiteren Erläuterung der Erfindung.

### Beispiele

### Komponente A

Verzweigtes Polycarbonat auf Basis Bisphenol A mit einer relativen Lösungsviskosität von ηᵣₑₗ = 1,34, gemessen in CH₂Cl₂ als Lösungsmittel bei 25°C und einer Konzentration von 0,5 g/100 ml, welches durch Einsatz von 0,3 mol-% Isatinbiscresol bezogen auf die Summe aus Bisphenol A und Isatinbiscresol verzweigt wurde.

### Komponente B-1

Schlagzähmodifikator, Methylmethacrylat-modifizierter Silikon-Acrylat-Kautschuk, Metablen^{®} SX 005 der Firma Mitsubishi Rayon Co., Ltd., CAS 143106-82-5.

### Komponente B-2

Schlagzähmodifikator, Styrol-Acrylnitril-modifizierter Silikon-Acrylat-Kautschuk" Metablen^{®} SRK 200 der Firma Mitsubishi Rayon Co., Ltd., CAS 178462-89-0.

### Komponente C

### Komponente C-1 (Vergleich)

### Bisphenol-A-basierendes Oligophosphat

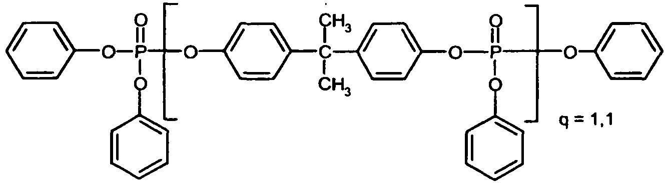

### Komponente C-2

Calciumphosphinat, mittlere Teilchengröße d₅₀= 50 µm.

### Komponente E

- Komponente E-1:: Polytetrafluorethylen (PTFE)
- Komponente E-2:: Pentaerythrittetrastearat
- Komponente E-3:: Irganox B900 (Hersteller: Ciba Specialty Chemicals Inc., Basel, Schweiz)

### Herstellung und Prüfung der Formmassen

Auf einem Zweischneckenextruder (ZSK-25) (Fa. Werner und Pfleiderer) werden die in Tabelle 1 aufgeführten Einsatzstoffe bei einer Drehzahl von 225 Upm und einem Durchsatz von 20 kg/h bei einer Maschinentemperatur von 260°C compoundiert und granuliert.

Die fertigen Granulate werden auf einer Spritzgussmaschine zu den entsprechenden Probekörpern verarbeitet (Massetemperatur 260°C, Werkzeugtemperatur 80°C, Fließfrontgeschwindigkeit 240 mm/s). Die Charakterisierung erfolgt gemäß DIN EN ISO 180/1A (Izod-Kerbschlagzähigkeit, a_{κ}), DIN EN ISO 527 (Zug-E-Modul), DIN ISO 306 (Vicat-Erweichungstemperatur, Verfahren B mit 50 N Belastung und einer Heizrate von 120 K/h), ISO 4599 (Environmental Stress Cracking (ESC)-Test gegen Toluol:Isopropanol 60:40, Exposition des Probekörpers für 10 min bei 2,4% Randfaserdehnung bei Raumtemperatur) und UL 94 V (an Stäben der Abmessung 127 x 12,7 x 1,5 mm gemessen).

Aus Tabelle 1 ist ersichtlich, dass nur die Zusammensetzungen der Beispiele 2 und 3 mit der Kombination aus Polycarbonat, Silikon-Schlagzähmodifikator und Calciumphosphinat die erfindungsgemäße Aufgabe lösen, d.h. eine Kombination aus gutem Flammschutz, hoher Wärmeformbeständigkeit, guten mechanischen Eigenschaften und guter Chemikalienbeständigkeit bieten.

**Tabelle 1: Zusammensetzungen und ihre Eigenschaften**

| **Zusammensetzung** | | **1 (Vgl.)** | **2** | **3** |
|---|---|---|---|---|
| A | Gew.-Tle | 85,2 | 85,2 | 85,2 |
| B-1 | Gew.-Tle | 4,7 | 4,7 | |
| B-2 | Gew.-Tle | | | 4,7 |
| C-1 | Gew.-Tle | 10,1 | | |
| C-2 | Gew.-Tle | | 10,1 | 10,1 |
| E-1 | Gew.-Tle | 0,4 | 0,4 | 0,4 |
| E-2 | Gew.-Tle | 0,2 | 0,2 | 0,2 |
| E-3 | Gew.-Tle | 0,1 | 0,1 | 0,1 |
| **Eigenschaften** | | | | |
| aK/ RT (DIN EN ISO 180/1A) [zäh] | kJ/m² | | 70,2 | 69,1 |
| aK/ RT (DIN EN ISO 180/1A) [spröd] | kJ/m² | 11,2 | | |
| aK/ -30°C (DIN EN ISO 180/1A) [spröd] | kJ/m² | 7,9 | 26,2 | 19,2 |
| Zug-E-Modul (DIN EN ISO 527) | N/mm² | 2515 | 2673 | 2753 |
| Vicat B 120 (DIN ISO 306) | °C | 114 | 145 | 145 |
| **ESC-Verhalten** / [2,4%] | Bewertung | BR | o.BR | o.BR |
| **Brandverhalten (UL 94 V 1,5mm)** | | | | |
| UL 94 V 1,5mm / 2d [Bewertung] | | vo | vo | vo |
| UL 94 V 1,5mm / 2d [Gesamt-NBZ] | s | 13 | 7 | 7 |

| | | | | |
|---|---|---|---|---|
| BR. = Bruch o.BR = kein Bruch NBZ = Nachbrennzeit | | | | |

## Patentansprüche

1. Zusammensetzungen enthaltend
A) 50 bis 99,4 Gew.-Teile (jeweils bezogen auf die Summe der Gewichtsteile der Komponenten A+B+C) aromatisches Polycarbonat und/oder aromatisches Polyestercarbonat,
B) 0,5 bis 20 Gew.-Teile (jeweils bezogen auf die Summe der Gewichtsteile der Komponenten A+B+C) Pfropfpolymerisat enthaltend einen Silikon- oder Silikonacrylatkautschuk,
C) 0,1 bis 30 Gew.-Teile (jeweils bezogen auf die Summe der Gewichtsteile derKomponenten A+B+C) eines Salzes oder eine Mischung von Salzen einer Phosphinsäure der Formel (IV), 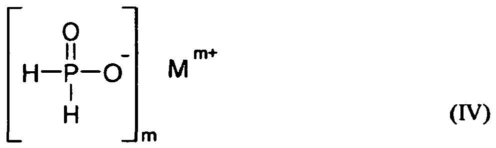 worin
M^{m+} ein Metallkation der 1. Hauptgruppe (Alkalimetalle; m = 1), 2. Hauptgruppe (Erdalkalimetalle; m = 2) oder der 3. Hauptgruppe (m = 3) oder der 2., 7. oder 8. Nebengruppe (wobei m eine ganze Zahl von 1 bis 6, bedeutet) des Periodensystems ist, und
E) Antidrippingmittel.

2. Zusammensetzung gemäß Anspruch 1, enthaltend 3 bis 8 Gew.-Teile (jeweils bezogen auf die Summe der Gewichtsteile der Komponenten A+B+C) Pfropfpolymerisat enthaltend einen Silikon- oder Silikonacrylatkautschuk gemäß Komponente B).

3. Zusammensetzung gemäß Anspruch 1 oder 2, enthaltend 7 bis 12 Gew.-Teile (jeweils bezogen auf die Summe der Gewichtsteile der Komponenten A+B+C) eines Salzes einer Phosphinsäure.

4. Zusammensetzung gemäß einem der Ansprüche 1 bis 3 enthaltend 0 bis 20 Gew.-Teile (bezogen auf die Summe der Gewichtsteile der Komponenten A+B+C = 100) kautschukfreies Vinyl(Co)Polymerisat und/oder Polyalkylenterephthalat als Komponente D).

5. Zusammensetzung gemäß einem der Ansprüche 1 bis 3, die frei ist von kautschukfreiem Vinyl(Co)Polymerisat und/oder Polyalkylenterephthalat.

6. Zusammensetzung gemäß einem der Ansprüche 1 bis 5, enthaltend als Komponente B) ein oder mehrere Pfropfpolymerisate von
B. 1 5 bis 95 Gew.-% eines oder mehrerer Vinylmonomeren auf
B.2 95 bis 5 Gew.-% einer oder mehrerer Pfropfgrundlagen ausgewählt aus der Gruppe der Silikonkautschuke (B.2.1) und Silikonacrylat-Kautschuke (B.2.2).

7. Zusammensetzung gemäß Anspruch 6, enthaltend als B.1 wenigstens ein Vinylmonomer ausgewählt aus der Gruppe bestehend aus Styrol, α-Methylstyrol, p-Methylstyrol, p-Chlorstyrol, Methylmethacrylat, Ethylmethacrylat, 2-Ethylhexylmethacrylat, Allylmethacrylat, Methylacrylat, Ethylacrylat, n-Butylacrylat, t-Butylacrylat, Acrylsäure, Methacrylsäure, Acrylnitril, Methacrylnitril, Maleinsäureanhydrid und N-Phenyl-Maleinimid.

8. Zusammensetzung gemäß einem der Ansprüche 1 bis 7, wobei das Pfropfpolymerisat einen Silikonacrylat-Kautschuke (B.2.2) als Pfropfgrundlage B.2 enthält.

9. Zusammensetzung gemäß Anspruch 8 9, **dadurch gekennzeichnet, dass** der Silikonacrylat-Kautschuke ein Komposit-Kautschuke mit pfropfaktiven Stellen ist, enthaltend 10 - 90 Gew.-% Silikonkautschuk-Anteil und 90 bis 10 Gew.-% Polyalkyl(meth)acrylatkautschuk-Anteil, wobei sich die beiden genannten Kautschuk-Komponenten im Komposit-Kautschuk gegenseitig durchdringen, so dass sie sich nicht wesentlich voneinander trennen lassen.

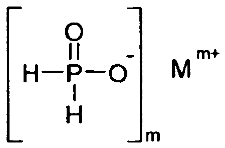

10. Zusammensetzung gemäß Anspruch 1 wobei M^{m+} = Ca²⁺ und m = 2 ist oder M^{m+} = Al³⁺ und m = 3 ist.

11. Zusammensetzung gemäß einem der Ansprüche 1 bis 10, wobei die mittlere Teilchengröße d₅₀ des Phosphinsäuresalzes (Komponente C) kleiner als 80 µm ist.

12. Zusammensetzung gemäß einem der Ansprüche 1 bis 11, wobei die Zusammensetzung frei ist von phosphorhaltigen Flammschutzmitteln ausgewählt aus den Gruppe der Mono- und oligomeren Phosphor- und Phosphonsäureester, Phosphonatamine und Phosphazene.

13. Zusammensetzung gemäß Anspruch 1, enthaltend weitere handelsüblichen Zusatzstoffe gemäß Komponente E), die von Komponente B) verschiedene kautschukmodifizierte Pfropfpolymerisate, Flammschutzsynergisten, Gleit- und Entformungsmittel, Nukleiermittel, Stabilisatoren, Antistatika, Säuren, Füll- und Verstärkungsstoffe sowie Farbstoffe und Pigmente sind.

14. Zusammensetzung gemäß Anspruch 13, wobei die Zusammensetzungen frei ist an von Komponente B verschiedener Pfropfpolymerisate.

15. Formkörper, enthaltend eine Zusammensetzung nach einem der Ansprüche 1 bis 14.

## Claims

1. Compositions comprising
A) from 50 to 99.4 parts by weight (based in each case on the total of the parts by weight of components A + B + C) of aromatic polycarbonate and/or of aromatic polyester carbonate,
B) from 0.5 to 20 parts by weight (based in each case on the total of the parts by weight of components A + B + C) of graft polymer comprising a silicone rubber or silicone acrylate rubber,
C) from 0.1 to 30 parts by weight (based in each case on the total of the parts by weight of components A + B + C) of a salt or a mixture of salts of a phosphinic acid of the formula (IV). 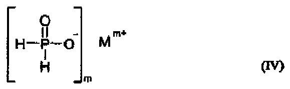 in which
M^{m+} is a metal cation of the 1st main group (alkali metals: m = 1), 2nd main group (alkaline earth metals: m = 2) or the 3rd main group (m = 3) or the 2nd, 7th or 8th transition group (where m is an integer from 1 to 6) of the Periodic Table of the Elements, and
E) antidrip agent.

2. Composition according to Claim 1, comprising from 3 to 8 parts by weight (based in each case on the total of the parts by weight of components A + B + C) of graft polymer comprising a silicone rubber or silicone acrylate rubber according to component B).

3. Composition according to Claim 1 or 2, comprising from 7 to 12 parts by weight (based in each case on the total of the parts by weight of components A + B + C) of a salt of a phosphinic acid.

4. Composition according to any of Claims 1 to 3 comprising from 0 to 20 parts by weight (based in each case on the total of the parts by weight of components A + B + C = 100) of rubber-free vinyl (co)polymer and/or polyalkylene terephthalate as component D).

5. Composition according to any of Claims 1 to 3, which is free from rubber-free vinyl (co)polymer and/or polyalkylene terephthalate.

6. Composition according to any of Claims 1 to 5, comprising, as component B), one or more graft polymers of
B.1 from 5 to 95% by weight of one or more vinyl monomers on
B.2 from 95 to 5% by weight of one or more graft bases selected from the group of silicone rubbers (B.2.1) and silicone acrylate rubbers (B.2.2).

7. Composition according to Claim 6, comprising, as B.1, at least one vinyl monomer selected from the group consisting of styrene, α-methylstyrene, p-methylstyrene, p-chlorostyrene, methyl methacrylate, ethyl methacrylate, 2-ethylhexyl methacrylate, allyl methacrylate, methyl acrylate, ethyl acrylate, n-butyl acrylate, tert-butyl acrylate, acrylic acid, methacrylic acid, acrylonitrile, methacrylonitrile, maleic anhydride and n-phenylmaleimide.

8. Composition according to any of Claims 1 to 7, where the graft polymer comprises a silicone acrylate rubber (B.2.2) as graft base B.2.

9. Composition according to Claim 8, **characterized in that** the silicone acrylate rubber is a composite rubber having graft-active sites, comprising from 10 to 90% by weight of silicone rubber content and from 90 to 10% by weight of polyalkyl (meth)acrylate rubber content, where the two rubber components mentioned penetrate into one another within the composite rubber, and cannot therefore be separated from one another to any substantial extent.

10. Composition according to Claim 1, where M^{m+} = Ca²' and m = 2 or M^{m+} = Al³' and m = 3.

11. Composition according to any of Claims 1 to 10, where the median particle size d₅₀ of the phosphinic salt (component C) is smaller than 80 µm.

12. Composition according to any of Claims 1 to 11, where the composition is free from phosphorus-containing flame retardants selected from the group of the monomeric and oligomeric phosphoric and phosphonic esters, phosphonate amines and phosphazenes.

13. Composition according to Claim 1, comprising further commercially available additives according to component E), these being pigments, dyes, reinforcing materials, fillers, acids, antistatic agents, stabilizers, nucleating agents, lubricants and mould-release agents, flame retardant synergists, and rubber-modified graft polymers differing from component B).

14. Composition according to Claim 13, where the composition is free from graft polymers differing from component B.

15. Mouldings, comprising a composition according to any of Claims 1 to 14.

## Revendications

1. Compositions contenant
A) 50 à 99,4 parties en poids (chaque fois rapportées à la somme des parties en poids des composants A+B+C) de polycarbonate aromatique et/ou de polyestercarbonate aromatique,
B) 0,5 à 20 parties en poids (chaque fois rapportées à la somme des parties en poids des composants A+B+C) de polymère greffé contenant un caoutchouc de silicone ou silicone-acrylate,
C) 0,1 à 30 parties en poids (chaque fois rapportées à la somme des parties en poids des composants A+B+C) d'un sel ou d'un mélange de sels d'un acide phosphinique de la formule (IV), 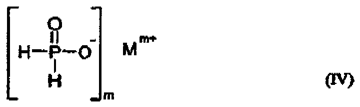 dans laquelle
M^{m+} est un cation métallique du 1er groupe principal (métaux alcalins ; m = 1), du 2ème groupe principal (métaux alcalino-terreux ; m = 2) ou du 3ème groupe principal (m = 3) ou du 2ème, 7ème ou 8ème groupe secondaire (m signifiant un nombre entier de 1 à 6) du système périodique, et
E) des agents anti-gouttes.

2. Composition selon la revendication 1, contenant 3 à 8 parties en poids (chaque fois rapportées à la somme des parties en poids des composants A+B+C) de polymère greffé contenant un caoutchouc de silicone ou silicone-acrylate selon le composant B).

3. Composition selon la revendication 1 ou 2, contenant 7 à 12 parties en poids (chaque fois rapportées à la somme des parties en poids des composants A+B+C) d'un sel d'un acide phosphinique.

4. Composition selon l'une quelconque des revendications 1 à 3, contenant 0 à 20 parties en poids (chaque fois rapportées à la somme des parties en poids des composants A+B+C = 100) de (co)polymère de vinyle sans caoutchouc et/ou de polyalkylène téréphtalate comme composant D).

5. Composition selon l'une quelconque des revendications 1 à 3, qui est exempte de (co)polymère de vinyle sans caoutchouc et/ou de poly(téréphtalate d'alkylène).

6. Composition selon l'une quelconque des revendications 1 à 5, contenant comme composant B) un ou plusieurs polymères greffés de
B.1 5 à 95 % en poids d'un ou plusieurs monomères de vinyle sur
B.2 95 à 5% en poids d'une ou plusieurs bases de greffage choisies dans le groupe des caoutchoucs de silicone (B.2.1) et des caoutchoucs de silicone-acrylate (B.2.2).

7. Composition selon la revendication 6, contenant comme B.1 au moins un monomère de vinyle, choisi dans le groupe constitué par le styrène, l'α-méthylstyrène, le p-méthylstyrène, le p-chlorostyrène, le méthacrylate de méthyle, le méthacrylate d'éthyle, le méthacrylate de 2-éthylhexyle, le méthacrylate d'allyle, l'acrylate de méthyle, l'acrylate d'éthyle, l'acrylate de n-butyle, l'acrylate de t-butyle, l'acide acrylique, l'acide méthacrylique, l'acrylonitrile, le méthacrylonitrile, l'anhydride de l'acide maléique et le N-phénylmaléinimide.

8. Composition selon l'une quelconque des revendications 1 à 7, dans laquelle le polymère greffé contient un caoutchouc de silicone-acrylate (B.2.2) comme base de greffage B.2.

9. Composition selon la revendication 8, **caractérisée en ce que** le caoutchouc acrylate de silicone est un caoutchouc composite présentant des sites actifs pour le greffage, contenant 10 à 90% en poids de proportion de caoutchouc silicone et 90 à 10% en poids de proportion de caoutchouc poly((méth)acrylate d'alkyle), les deux composants de caoutchouc mentionnés dans le caoutchouc composite se pénétrant mutuellement, de telle manière qu'ils ne peuvent essentiellement pas être séparés l'un de l'autre.

10. Composition selon la revendication 1, dans laquelle M^{m+} = Ca²⁺ et m = 2 ou M^{m+} = Al³⁺ et m = 3.

11. Composition selon l'une quelconque des revendications 1 à 10, la grosseur moyenne des particules d₅₀ du sel de l'acide phosphinique (composant C) étant inférieure à 80 µm.

12. Composition selon l'une quelconque des revendications 1 à 11, dans laquelle la composition est exempte d'agents de protection contre les flammes contenant du phosphore, choisis dans le groupe des esters d'acide phosphorique et phosphonique monomères et oligomères, de phosphonatamines et de phosphazènes.

13. Composition selon la revendication 1, contenant d'autres additifs usuels du commerce selon le composant E), qui sont des polymères greffés modifiés au caoutchouc différents du composant B), des agents synergistes de protection contre les flammes, des agents lubrifiants et de démoulage, des agents de nucléation, des stabilisateurs, des antistatiques, des acides, des charges et des substances de renforcement ainsi que des colorants et des pigments.

14. Composition selon la revendication 13, la composition étant exempte de polymères greffés différents du composant B.

15. Corps moulé, contenant une composition selon l'une quelconque des revendications 1 à 14.
